# EUROPEAN PATENT SPECIFICATION

(11) **EP 3 339 112 B1**
(45) Date of publication and mention of the grant of the patent: **15.04.2020**
(21) Application number: 16461582.5
(22) Date of filing: 23.12.2016
(51) Int. Cl.: B60S 1/04

(54) **WIPER MOTOR MOUNTING ASSEMBLY**
WISCHERMOTORMONTAGEANORDNUNG
ENSEMBLE DE MONTAGE DE MOTEUR D'ESSUIE-GLACE

(43) Date of publication of application: 27.06.2018
(73) Proprietor: Valeo Autosystemy SP. Z.O.O., 32-050 Skawina (PL)
(72) Inventor: SUPERSON, Marcin, 37-310 Nowa Sarzyna (PL); ROGALA, Andrzej, 30-867 Krakow (PL)

(56) References cited:
- DE-A1- 10 054 321
- FR-A1- 2 783 477
- FR-A1- 2 929 570

## Description

### TECHNICAL FIELD

The present invention relates to a wiper motor mounting assembly, for securing windscreen wiper assembly in a vehicle, in particular a motor vehicle.

### PRIOR ART

A wiper motor mounting assemblies are known from the priori art. Typically, a wiper motor mounting assembly comprises a wiper motor and a supporting element called bracket for mounting the wiper motor unit to a vehicle body. The wiper motor unit comprises at least one mounting hole for receiving fixing means for fixing the wiper motor unit to the bracket while the bracket comprises at least one aperture for receiving fixing means for fixing the bracket to the wiper motor unit. The bracket itself is secured to a component of a vehicle body. The known type of fixing means for assembling the wiper motor unit and the bracket is a screw.

Such solution is disclosed in the patent document US8567001. In the known assembly, the motor unit comprises a shaft which extends through a bore provided in a bracket. The wiper motor unit is fixed to a mounting plate with the aid of screws, vertically inserted into the housing via openings made in the mounting plate.

It has been observed that during the assembling operation the time needed to securely connect the wiper motor unit to the supporting element is quite long and the actions to be taken by the operator are relatively complex, in particular due to the need of using additional equipment. Additionally disconnecting such a connection also takes up a lot of time, which makes possible necessary maintenance difficult. Moreover due to the fact that screws are separate parts a risk of dropping them during the assembling operation is rather high which might prolong this stage of the vehicle production or its maintenance.

The above mentioned drawbacks has been partially resolved by a solution suggested in the French patent publication FR3027860 which describes a windscreen wiper motor assembly comprising a motor unit and a support element for fixing the motor unit to a vehicle element. The motor unit is mounted to the supporting element by two types of detachable connections; the first one being a quick coupling type connection, the second one being screws.

However, such solution proved to be not efficient. Firstly, such solution is not robust enough as the structure of the quick couplings made on the support elements are subjected to strong pushing forces which often leads to brake of said quick couplings upon assembling or disassembling. Secondly, support elements provided with extrusions forming quick type connections are not convenient for secure storing in piles. Finally, the connection topology known from FR3027860 has to be symmetrical, which imposes limitations for its applicability. DE-A-10054321 shows the preamble of claim 1.

### DISCLOSURE OF THE INVENTION

It an object of the invention to provide a wiper motor mounting assembly that would allow a fast and more robust assembling operation while not complicating the storage process of components of the mounting assembly. Another object of the invention is to provide a more flexible assembly in terms of its applicability.

This object is achieved according to the invention as claimed in claim 1, namely by providing a wiper motor mounting assembly comprising a wiper motor unit and a bracket for mounting the wiper motor unit to a vehicle body wherein the wiper motor unit comprises at least one fixing hole for receiving fixing means, the bracket comprises at least one fixing aperture for receiving fixing means, the bracket being fixed to the wiper motor unit by fixing means in a mounted state, characterized in that in the mounted state the bracket and the wiper motor unit are additionally connected by at least one engaging means, the engaging means being an integral part of the wiper motor unit and in that the bracket is provided with at least one engaging aperture for receiving at least one engaging means.

Advantageously, said engaging means is formed from the same material as a housing of the wiper motor unit.

Advantageously, the wiper motor housing is made of aluminum alloys, plastic materials including composite materials enriched with glass fibers, stillness steel or cast iron.

Advantageously, the engaging means is a cantilever type snap fit.

Advantageously, the engaging means comprises a head, a stem and an recess made between the head and the stem.

Preferably, the bracket is provided with at least two fixing apertures and the wiper motor unit is provided with at least two fixing holes.

In a preferred embodiment, the engaging aperture is one of the triangular, rectangle, trapezoidal, oval or circular shape and the engaging means is of the matching shape.

According to the invention, an engaging hook of L-shaped cross section protrudes from the engaging aperture.

In a preferred embodiment, the distance from the central axis B of a pivot shaft protruding from the wiper motor unit to the fixing means is not smaller than a distance between the central axis B of said pivot shaft to a center of the engaging means which is the closest to the central axis B among all engaging means.

In a preferred embodiment, all fixing means and all engaging means are placed essentially at the same distance from the central axis B of the pivot shaft protruding from the wiper motor unit.

Preferably fixing means is selected from a group comprising screw, bolt or rivet.

Preferably the bracket is a plate-like bracket made of metal or plastic.

Advantageously, change in the direction of fixing the windscreen wiper motor unit with the bracket as well as the usage of different fixing means arrangement solves the problems revealed in the prior art.

An alternative type of detachable connection of the wiper motor unit and the bracket in the form of engaging means which protrude from the wiper motor unit and an aperture made in the bracket still allows an easy and fast assembling operation is guaranteed.

By providing the wiper motor unit with at least one engaging means a complication of the bracket structure is avoided, which as a consequence does not complicate the process of storing and transporting it.

Because of the fact that said engaging means can be made of the same material as the wiper motor unit housing a greater durability, strength and deformation resistance of the detachable connection is provided. In consequence numerous repeated disassembling without damaging the present assembly is possible.

According to the present invention, mounting of the wiper motor unit with the bracket is done by the engaging means protruding from the wiper motor unit towards the bracket from below said bracket and through it.

Because the arrangement of fixing and engaging means does not have to be symmetrical, and is actually preferred over the symmetrical one, the assembly according to the invention is convenient for a greater number of applications.

Other advantage arising from replacing screws by engaging means which protrude from the motor unit is a standardization of components used in pivot assembly as well as reduction of the weight of the assembly.

Moreover thanks to introducing additional type of detachable connections the interface points between the motor unit and the bracket increases which enhances the rigidity and robustness of the assembly.

### BRIEF DESCRIPTION OF THE DRAWINGS

Features and advantages of invention disclosed herein will be better understood with respect to the following description of several embodiments, provided with reference to the accompanying drawings, in which:
FIG. 1 shows a perspective view of the wiper motor mounting assembly with the accommodating hole for the shaft in accordance with one embodiment,
FIG. 2 shows a perspective view of the wiper motor mounting assembly with the accommodating hole for the shaft in accordance with another embodiment,
FIG. 3 shows a perspective view of the wiper motor mounting assembly without the accommodating hole for the shaft in accordance with another embodiment,
FIG. 4 shows a sectioned, perspective view of a further detail of the wiper motor mounting assembly,
FIG. 5 shows an upper view of a partial region of the wiper motor mounting assembly in accordance with one embodiment,
FIG. 6 shows an upper view of a partial region of the wiper motor mounting assembly in accordance with another embodiment,
FIG. 7 shows a sectioned, perspective view of the wiper motor mounting assembly in accordance with an embodiment of the invention,
FIG.8 - FIG. 16 show a schematic upper view of different arrangements of the linkage between the wiper motor and the bracket, depicting different positioning of snap-fit connections and screws with respect to the axis of the pivot shaft in accordance with the invention.

Identical elements or elements having the same function are provided with the same reference numbers in the figures.

It should be understood that the embodiments and attached drawings are provided for exemplary purposes only and should not be seen as limiting the scope of the invention.

### DETAILED DESCRIPTION OF THE PREFERRED EMBODIMENTS

In the present application, "detachable fixing", "detachable connection" is understood as a fixing which is removable or a non-permanent fixing. Two elements fixed in a detachable manner may be easily dismantled from one another. More specifically, two elements fixed in a detachable manner may be separated from one another without damaging at least one of said elements.

In the present application the term "means" is understood as one or more elements.

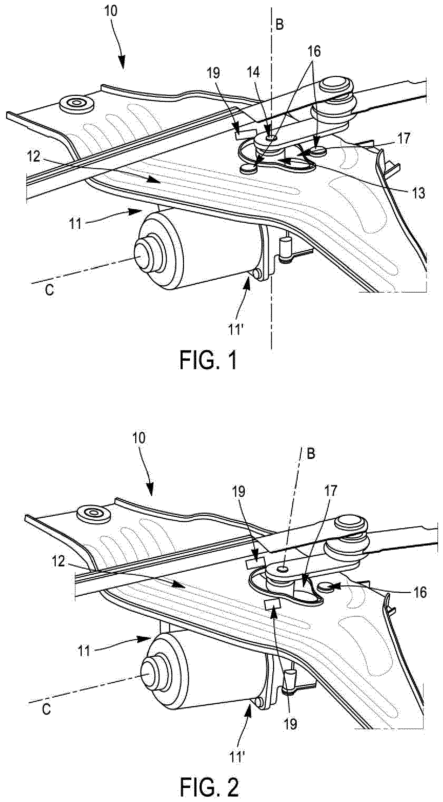

Figure 1 shows a wiper motor mounting assembly 10. The assembly 10 comprises the wiper motor unit 11 and the bracket 12. The wiper motor unit 11 is a part of a larger wiper device (not shown). The wiper motor unit 11 is a unit for driving a wiper arm (not shown). The wiper motor unit 11 has a housing 11' of a shape designed according to the requirements of a specific system. In general it might have a quasi-cylindrical shape or similar. Typically the wiper motor unit 11 comprises an electric motor and a gear arrangement, coupled to the pivot shaft 13 which, for example, extends perpendicularly to the main axis of the wiper motor housing 11' (see axis C in Fig. 1). The wiper motor housing 11' accommodates the motor and the gearing arrangement (not shown). The gearing arrangement connects the shaft of the electric motor to the pivot shaft 13 of the wiper motor unit 11. As shown in Fig.1 said pivot shaft 13 has an upper end 14 protruding above the wiper motor housing 11'. The pivot shaft 13 is coupled in a non-rotatably way to a wiper arm (not shown). In one embodiment, in a mounted state said pivot shaft 13 protrudes vertically from the motor unit 11 towards the bracket 12, with an upper end 14 of the pivot shaft 13 passing via said bracket 12 through the accommodating hole 17. The wiper motor unit 11 comprises also at least one fixing hole 15' (not shown in Fig.1) for receiving fixing means 16 for fixing the wiper motor unit 11 to the bracket 12 in a more secure way. An axis B passing vertically through the pivot shaft 13 constitutes a reference axis B for any topology of detachable connections between the bracket 12 and the wiper motor unit 11.

The wiper motor housing 11' is made of a material resistant to distortions and/or deformations. In particular the housing 11' is made of aluminum alloys, plastic materials including composite materials enriched with glass fibers, stillness steel or cast iron.

The bracket 12 is a part specially designed so as to be coupled to the wiper motor unit 11 and to a component of a vehicle, in particular a component of vehicle body (not shown). Its function is supporting the wiper motor unit 11. In the mounted state it is fixed to one of the front or rear parts of the vehicle. The bracket 12 is typically made of plastic, but it can be also made of metal. Advantageously, the bracket 12 is provided with an accommodating hole 17 for receiving an upper end 14 of the pivot shaft 13 and with at least one fixing aperture 15 (not visible in Fig.1) for receiving fixing means 16 in order to lock securely the wiper motor unit 11 to the bracket 12. Additionally, the bracket 12 is provided with at least one engaging aperture 18 for receiving an engaging means 19.

The coupling between the bracket 12 and the wiper motor unit 11 must be of a detachable type. The need of detachable fixings in the wiper motor mounting assembly 10 arises from the fact that the wiper motor unit 11 is a part being subjected to different failures. Thus, there should be a possibility to take off the wiper motor unit 11 from the bracket for the maintenance purposes.

In accordance with the invention a detachable linkage between the wiper motor unit 11 and the bracket 12 is provided by two types of connections, namely well know screw or bolt or rivet type connection and additionally a snap fit connection. Said snap fit connection is a type of connection made without tools. An extending part of the snap fit connection is made on the wiper motor unit 11. As a consequence the additional snap fit connection according to the invention is done in one specific direction, namely from the wiper motor unit 11 into the bracket 12. This allows leaving the structure of the bracket 12 without unnecessary changes as to its surface and saving space for storing it. A snap fit connection in another direction would impede the storage of the brackets 12 in piles which is a very compact way of storing parts of the plate like shape before mounting them. As the shape of the housing 11' of the wiper motor unit 11 is less convenient for a compact storage in piles, further changes in its surface will not influence to much the need for storage space of the wiper motor units 11. Moreover the material of which the engaging means 19, being an integral part of the motor unit 11, is made is more resilient and durable.

As shown in Fig. 1 and Fig. 2 the bracket 12 and the wiper motor unit 11 are assembled in accordance with the invention by a combination of at least one fixing means 16, in particular screw and at least one engaging means 19, advantageously a set of engaging means 19. Said engaging means 19 are for example snap fit. At least one fixing means, for example a screw should be used to guarantee secure tightening, to assure stable connection, resilient to material fatigue due to loads. Replacing one screw by one snap fit connection allows to shorten the duration of the assembling operation by about 5 seconds. Fig. 1 depicts one engaging means 19, namely a snap fit connection and two fixing means 16, advantageously screws which are arranged around the accommodating hole 17 in equal distances from the above mentioned central axis B of the pivot shaft 13. Said engaging means 19 passes through an engaging aperture 18 for receiving engaging means 19 in the bracket 12 meanwhile two fixing means 16 pass through two apertures 15 (not visible in Fig.1) for receiving fixing means in the bracket 12.

Ratio of screws and span-fit connections depends on the size and/or shape of the wiper motor unit 11 and the bracket 12. As shown in Fig. 1, the connection is made with the aid of two fixing means 16 and one engaging means 19, while in Fig. 2, In accordance with another embodiment, the connection is made with the aid of one fixing means 16 and two engaging means 19.

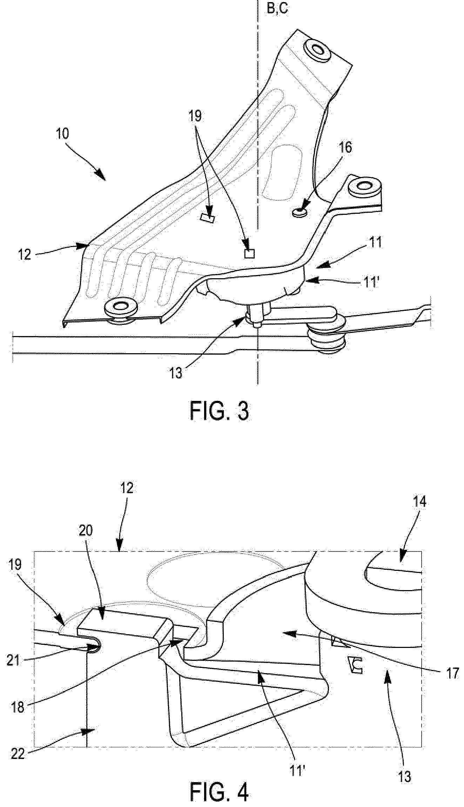

Fig. 3 illustrates a modified embodiment, in which the pivot shaft 13 does not extend through the bracket 12. In this case the wiper motor unit 11 has another construction. The pivot shaft 13 extends also perpendicularly along the same axis B as in Fig.1 but in other direction, namely downwards, away from the bracket 12. In this embodiment the main axis of the wiper motor housing 11' is also the central axis of the pivot shaft 13. The engaging means 19 and fixing means 16 for fixing the wiper motor unit 11 to the bracket 12 are advantageously arranged with respect to axis B, equidistantly from said axis B. Also the bracket 12 differs. There is no accommodating hole 17 in the central part of the bracket 12 for passing through the pivot shaft 13.

Fig. 4 shows details of the connection. The wiper motor unit 11 is provided with at least one engaging means 19 being its integral part and protruding from the wiper motor housing 11'. Said engaging means 19 serves to press against the engaging aperture 18 for receiving the engaging means 19 in the bracket 12. The first part of the engaging means 19 is a head 20. Second part of the engaging means 19, namely a stem 22 protrudes perpendicularly from the wiper motor housing 11' in the direction of the bracket 12. The head 20 is a part above the stem 22 at the end opposite of the housing 11'. Between the head 20 and the stem 22 an recess 21 is provided in the engaging means 19. Said recess is substantially perpendicular to the stem 22. In one embodiment, an appropriate edge of the engaging aperture 18 for receiving the engaging means in the bracket 12 couples with said in recess 21 in the mounted state of the wiper motor mounting assembly 10. In other words, in one embodiment the head 20 and the stem 22 interface with the upper and lower surface of the bracket 12.

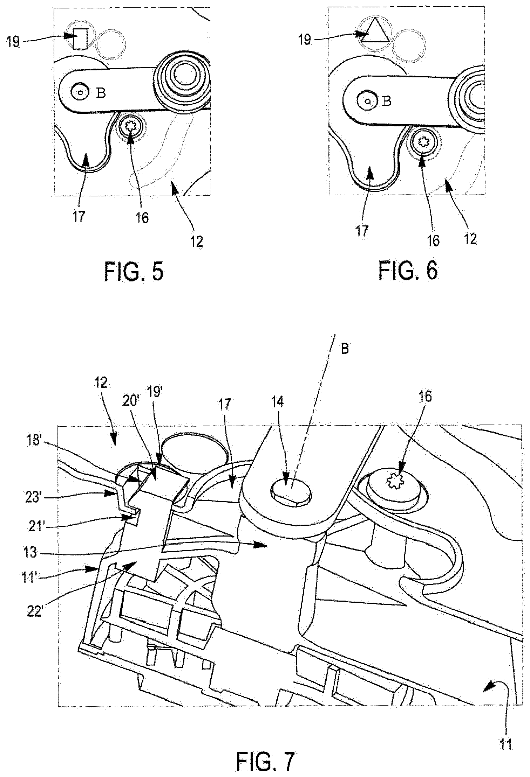

The cross-section of the head 20 of the engaging means 19 in a direction perpendicular to the stem 22 can be circular, triangular, trapezoid or rectangular, therefore, as shown in Fig. 5 and in Fig. 6 the shape of the engaging apertures 18 for receiving engaging means 19 might be different, for example rectangle, triangle, trapezoid, circular or oval . The shape of the head 20 and the engaging aperture 18 for receiving the engaging means is always matching in order to provide a tight connection between the bracket 12 and the wiper motor unit 11. The shape is determined accordingly to the requirements of the system.

The stem 22 and the head 20 can have different longitudinal and the transverse cross-sections. An embodiment according to which the head 20' has an essentially trapezoidal cross- section is shown on Fig. 7, although different shapes are permitted, for example rectangular one. As shown further in Fig. 7 also the engaging aperture 18' for receiving the engaging means 19', made in the bracket 12 might have different form. According to the invention, said engaging aperture 18' for receiving the engaging means is shaped so as to protrude partially from the surface of the bracket 12 towards the wiper motor unit 11. In such embodiment a hook 23' of L-shaped cross-section is formed in the bracket 12. It extends downwards from the edge of the engaging aperture 18' for receiving the engaging means. Said hook 23' is coupling with the recess 21' made in the engaging means 19' when the assembly 10 is in the mounted state. A horizontal arm of the hook 23' does not cover the whole engaging aperture 18' so as to allow passing through the head 20' of the engaging means. In other words, the hook 23' is gripping the head 20' of the engaging means 19.

The engaging means 19 and fixing means 16 (for example screws) can be arranged in groups, namely screws 16 next to each other and the engaging means 19 (for example snap-fits) on the opposite side of the axis B or interchangeably. Such solution provides the adaptability for different shapes of the bracket 12 and therefore possibility of implementing the present invention in different vehicles.

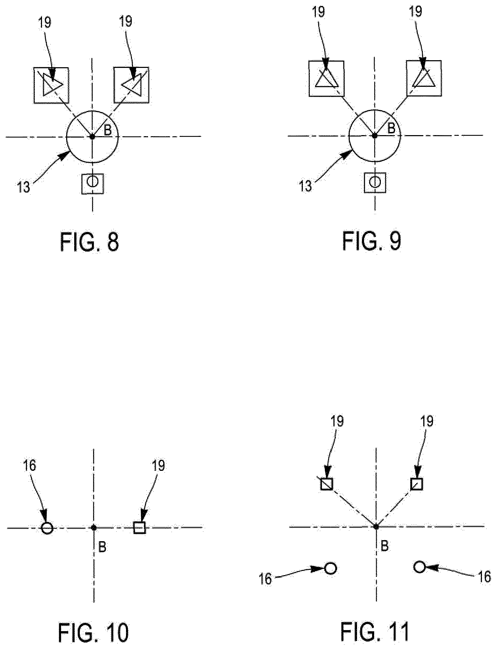

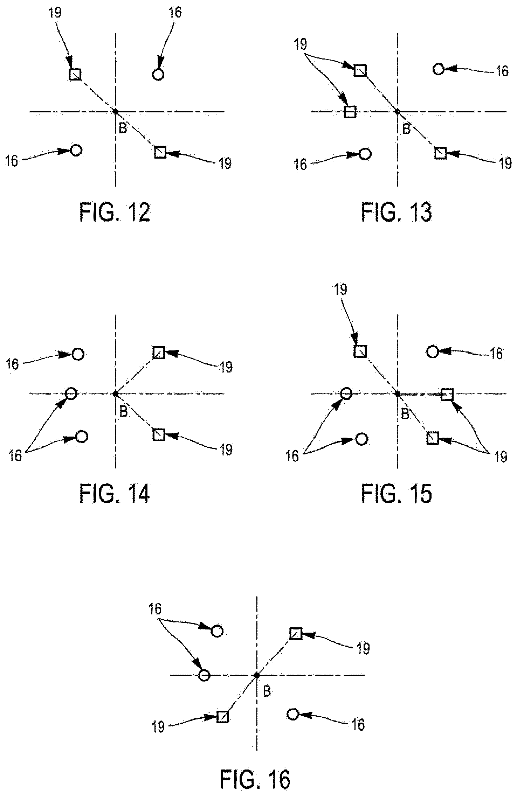

Fig. 8-16 depict different arrangements of screw type and snap fit type connections. The reference point used for positioning of the engaging means 19 and fixing means 16, snap-fit 19 and screws respectively, is an axis B protruding longitudinally from the pivot shaft 13. In other words, the axis B is the central axis of the pivot shaft 13. In one of embodiments, as shown in Fig. 8 and in Fig. 9 the arrangement comprises two engaging means 19 and one fixing means 16 which provide additional rigidity. In such arrangement the engaging means 19 are pushing each other apart while the screw is fixing the arrangement in place. The grouping of screws and engaging means 19 separately can be seen in Fig. 14. As seen in Fig.11 and Fig.12 the fixing means 16 and the engaging means 19 are advantageously placed symmetrically with respect to the pivot shaft axis B. As a general rule the distance from the central axis B of the pivot shaft 13 to each fixing means 16 is not smaller than a distance between the central axis B of the pivot shaft 13 to the central axis of the one engaging means 19 which is the closest to the center of the accommodating hole 17 (not shown) among all engaging means 19. For example, two fixing means 16 can be placed symmetrically with respect to a line C connecting the center of the figure whose vertices are defined by at least three engaging means 19, with the center of the accommodating hole 17.

Operation of assembling of the wiper motor unit 11 with the bracket 12 according to the invention is done by pushing the bracket 12 provided with at least one dedicated engaging aperture 18 for receiving an engaging means (latch, overlap) into a specific keeping feature, namely engaging means 19 (for example a snap fit) made on the wiper motor unit 11. This type of detachable connection is made without additional equipment or tools. Both parts are mounted thanks to the friction force or other type of force. Next, tightening of the bracket 12 to the wiper motor unit 11 by at least one fixing means 16 takes place. A screw or bolt or a rivet can be used as fixing means.

The wiper motor mounting assembly 10 according to the invention is not limited to the application and the embodiments described above, but can be modified in number of components, elements or units without departing from the claims.

### Definitions:

10 - a wiper motor mounting assembly,
11 - wiper motor unit
11'- wiper motor housing
12 - bracket
13 - pivot shaft
14 - upper end of pivot shaft
15 - fixing aperture for receiving fixing means
15' - fixing hole for receiving fixing means
16 - fixing means
17 - accommodating hole
18, 18' - engaging aperture for receiving engaging means
19, 19' - engaging means
20, 20'- head
21,21' - recess
22,22' - stem
23' - hook

## Claims

1. Wiper motor mounting assembly (10) comprising a wiper motor unit (11) and a bracket (12) for mounting the wiper motor unit (11) to a vehicle body wherein:
the wiper motor unit (11) comprises at least one fixing hole (15') for receiving fixing means (16)
the bracket (12) comprises at least one fixing aperture (15) for receiving fixing means (16), the bracket (12) being fixed to the wiper motor unit (11) by fixing means (16) in a mounted state
wherein in the mounted state, the bracket (12) and the wiper motor unit (11) are additionally connected by at least one engaging means (19), the engaging means (19) being an integral part of the wiper motor unit (11) and in that the bracket (12) is provided with at least one engaging aperture (18) for receiving at least one engaging means (19),
**characterized in that** said engaging aperture is shaped to protrude partially from the surface of the bracket (12) towards the wiper motor unit (11) and **in that** a hook (23') of L-shaped cross-section is formed in the bracket (12) and extends downwards from the edge of the engaging aperture (18') for receiving the engaging means.

2. Wiper motor mounting assembly according to claim 1, wherein said at least one engaging means (19) is formed from the same material as a housing (11') of the wiper motor unit (11).

3. Wiper motor mounting assembly according to claim 2, wherein the wiper motor housing (11') is made of aluminum alloys, plastic materials including composite materials enriched with glass fibers, stillness steel or cast iron.

4. Wiper motor mounting assembly according to any preceding claim, wherein the engaging means (19) is a cantilever type snap fit.

5. Wiper motor mounting assembly according to any preceding claim, wherein the engaging means (19) comprises a head (20), a stem (22) and a recess (21) made between the head (20) and the stem (22).

6. Wiper motor mounting assembly according to any preceding claim, wherein the bracket (12) is provided with at least two fixing apertures (15) and the wiper motor unit (11) is provided with at least two fixing holes (15').

7. Wiper motor mounting assembly according to any preceding claim, wherein the engaging aperture (18) is one of the triangular, rectangle, trapezoidal, oval or circular shape and the engaging means (19) is of the matching shape.

8. Wiper motor mounting assembly according to any preceding claim, wherein the distance from the central axis B of a pivot shaft (13) protruding from the wiper motor unit (11) to the fixing means (16) is not smaller than a distance between the central axis B of said pivot shaft (13) to a center of the engaging means (19) which is the closest to the central axis B among all engaging means (19).

9. Wiper motor mounting assembly according to claim 8, wherein all fixing means (16) and all engaging means (19) are placed essentially at the same distance from the central axis (B) of the pivot shaft (13) protruding from the wiper motor unit (11).

10. Wiper motor mounting assembly according to any preceding claim, wherein fixing means (16) is selected from a group comprising screw, bolt or rivet.

11. Wiper motor mounting assembly according to any preceding claim, wherein the bracket (12) is a plate-like bracket made of metal or plastic.

## Patentansprüche

1. Wischermotor-Montageanordnung (10), welche eine Wischermotoreinheit (11) und eine Halterung (12) zur Anbringung der Wischermotoreinheit (11) an einer Fahrzeugkarosserie umfasst, wobei:
die Wischermotoreinheit (11) wenigstens ein Befestigungsloch (15') zum Aufnehmen von Befestigungsmitteln (16) umfasst,
die Halterung (12) wenigstens eine Befestigungsöffnung (15) zum Aufnehmen von Befestigungsmitteln (16) umfasst, wobei in einem montierten Zustand die Halterung (12) durch Befestigungsmittel (16) an der Wischermotoreinheit (11) befestigt ist,
wobei in dem montierten Zustand die Halterung (12) und die Wischermotoreinheit (11) durch wenigstens ein Eingriffsmittel (19) zusätzlich verbunden sind, wobei das Eingriffsmittel (19) ein integraler Bestandteil der Wischermotoreinheit (11) ist und wobei die Halterung (12) mit wenigstens einer Eingriffsöffnung (18) zum Aufnehmen wenigstens eines Eingriffsmittels (19) versehen ist,
**dadurch gekennzeichnet, dass** die Eingriffsöffnung so geformt ist, dass sie teilweise von der Oberfläche der Halterung (12) in Richtung der Wischermotoreinheit (11) vorsteht, und dadurch, dass ein Haken (23') mit L-förmigem Querschnitt in der Halterung (12) ausgebildet ist und sich vom Rand der Eingriffsöffnung (18') aus nach unten erstreckt, um das Eingriffsmittel aufzunehmen.

2. Wischermotor-Montageanordnung nach Anspruch 1, wobei das wenigstens eine Eingriffsmittel (19) aus demselben Material wie ein Gehäuse (11') der Wischermotoreinheit (11) ausgebildet ist.

3. Wischermotor-Montageanordnung nach Anspruch 2, wobei das Wischermotorgehäuse (11') aus Aluminiumlegierungen, Kunststoffmaterialien, einschließlich von mit Glasfasern angereicherten Verbundwerkstoffen, Edelstahl oder Gusseisen hergestellt ist.

4. Wischermotor-Montageanordnung nach einem der vorhergehenden Ansprüche, wobei das Eingriffsmittel (19) ein Schnappverschluss vom freitragenden Typ ist.

5. Wischermotor-Montageanordnung nach einem der vorhergehenden Ansprüche, wobei das Eingriffsmittel (19) ein Kopfstück (20), einen Schaft (22) und eine zwischen dem Kopfstück (20) und dem Schaft (22) hergestellte Aussparung (21) umfasst.

6. Wischermotor-Montageanordnung nach einem der vorhergehenden Ansprüche, wobei die Halterung (12) mit wenigstens zwei Befestigungsöffnungen (15) versehen ist und die Wischermotoreinheit (11) mit wenigstens zwei Befestigungslöchern (15') versehen ist.

7. Wischermotor-Montageanordnung nach einem der vorhergehenden Ansprüche, wobei die Eingriffsöffnung (18) eine Öffnung mit einer dreieckigen, rechteckigen, trapezförmigen, ovalen oder kreisförmigen Form ist und das Eingriffsmittel (19) von der dazu passenden Form ist.

8. Wischermotor-Montageanordnung nach einem der vorhergehenden Ansprüche, wobei der Abstand von der Mittelachse B eines Gelenkbolzens (13), der aus der Wischermotoreinheit (11) vorsteht, zu den Befestigungsmitteln (16) nicht kleiner als ein Abstand zwischen der Mittelachse B des Gelenkbolzens (13) und einem Mittelpunkt des Eingriffsmittels (19) ist, welches unter allen Eingriffsmitteln (19) der Mittelachse B am nächsten ist.

9. Wischermotor-Montageanordnung nach Anspruch 8, wobei alle Befestigungsmittel (16) und alle Eingriffsmittel (19) im Wesentlichen in demselben Abstand von der Mittelachse (B) des aus der Wischermotoreinheit (11) vorstehenden Gelenkbolzens (13) angeordnet sind.

10. Wischermotor-Montageanordnung nach einem der vorhergehenden Ansprüche, wobei die Befestigungsmittel (16) aus einer Gruppe ausgewählt sind, die Schrauben, Bolzen oder Niete umfasst.

11. Wischermotor-Montageanordnung nach einem der vorhergehenden Ansprüche, wobei die Halterung (12) eine plattenartige Halterung ist, die aus Metall oder Kunststoff hergestellt ist.

## Revendications

1. Ensemble de montage de moteur d'essuie-glace (10), comprenant une unité de moteur d'essuie-glace (11) et une console (12) pour monter l'unité de moteur d'essuie-glace (11) sur une carrosserie de véhicule, dans lequel :
l'unité de moteur d'essuie-glace (11) comprend au moins un trou de fixation (15') pour recevoir des moyens de fixation (16),
la console (12) comprend au moins une ouverture de fixation (15) pour recevoir des moyens de fixation (16), la console (12) étant fixée à l'unité de moteur d'essuie-glace (11) par des moyens de fixation (16) dans un état monté,
dans lequel, à l'état monté, la console (12) et l'unité de moteur d'essuie-glace (11) sont de plus connectées par au moins un moyen de mise en prise (19), le moyen de mise en prise (19) faisant partie intégrante de l'unité de moteur d'essuie-glace (11), et la console (12) est munie d'au moins une ouverture de mise en prise (18) pour recevoir au moins un moyen de mise en prise (19),
**caractérisé en ce que** ladite ouverture de mise en prise est façonnée pour faire saillie en partie depuis la surface de la console (12) en direction de l'unité de moteur d'essuie-glace (11), et **en ce qu'**un crochet (23') de section transversale en forme de L est formé dans la console (12) et s'étend vers le bas depuis le bord de l'ouverture de mise en prise (18') pour recevoir le moyen de mise en prise.

2. Ensemble de montage de moteur d'essuie-glace selon la revendication 1, dans lequel ledit au moins un moyen de mise en prise (19) est formé à partir du même matériau qu'un boîtier (11') de l'unité de moteur d'essuie-glace (11).

3. Ensemble de montage de moteur d'essuie-glace selon la revendication 2, dans lequel le boîtier de moteur d'essuie-glace (11') est fabriqué en alliages d'aluminium, en matières plastiques comprenant des matières composites enrichies de fibres de verre, en acier inoxydable ou en fonte.

4. Ensemble de montage de moteur d'essuie-glace selon l'une quelconque des revendications précédentes, dans lequel le moyen de mise en prise (19) est un assemblage par pression en porte-à-faux.

5. Ensemble de montage de moteur d'essuie-glace selon l'une quelconque des revendications précédentes, dans lequel le moyen de mise en prise (19) comprend une tête (20), une tige (22) et un retrait (21) réalisé entre la tête (20) et la tige (22).

6. Ensemble de montage de moteur d'essuie-glace selon l'une quelconque des revendications précédentes, dans lequel la console (12) est munie d'au moins deux ouvertures de fixation (15) et l'unité de moteur d'essuie-glace (11) est munie d'au moins deux trous de fixation (15').

7. Ensemble de montage de moteur d'essuie-glace selon l'une quelconque des revendications précédentes, dans lequel l'ouverture de mise en prise (18) est l'une d'une forme triangulaire, rectangulaire, trapézoïdale, ovale ou circulaire, et le moyen de mise en prise (19) est de forme assortie.

8. Ensemble de montage de moteur d'essuie-glace selon l'une quelconque des revendications précédentes, dans lequel la distance de l'axe central B d'un arbre de pivotement (13) faisant saillie depuis l'unité de moteur d'essuie-glace (11) jusqu'aux moyens de fixation (16) n'est pas inférieure à une distance entre l'axe central B dudit arbre de pivotement (13) jusqu'à un centre du moyen de mise en prise (19) qui est le plus proche de l'axe central B parmi tous les moyens de mise en prise (19).

9. Ensemble de montage de moteur d'essuie-glace selon la revendication 8, dans lequel tous les moyens de fixation (16) et tous les moyens de mise en prise (19) sont placés essentiellement à la même distance par rapport à l'axe central (B) de l'arbre de pivotement (13) faisant saillie depuis l'unité de moteur d'essuie-glace (11).

10. Ensemble de montage de moteur d'essuie-glace selon l'une quelconque des revendications précédentes, dans lequel le moyen de fixation (16) est sélectionné dans un groupe comprenant une vis, un boulon ou un rivet.

11. Ensemble de montage de moteur d'essuie-glace selon l'une quelconque des revendications précédentes, dans lequel la console (12) est une console de type plaque réalisée en métal ou en plastique.
